(19) Europäisches Patentamt
European Patent Office
Office européen des brevets

(11) EP 1 577 204 B1

(12) EUROPEAN PATENT SPECIFICATION

(45) Date of publication and mention of the grant of the patent:
**29.08.2007 Bulletin 2007/35**

(51) Int Cl.:
***B62K 21/12** (2006.01)* ***B62K 21/26** (2006.01)*

(21) Application number: **04025288.4**

(22) Date of filing: **25.10.2004**

(54) **Handlebar for cycles or motorcycles**

Lenkstange für Fahrräder oder Motorräder

Guidon pour cycles ou motocyclettes

(84) Designated Contracting States:
**AT BE BG CH CY CZ DE DK EE ES FI FR GB GR HU IE IT LI LU MC NL PL PT RO SE SI SK TR**

(30) Priority: **15.03.2004 EP 04425173**

(43) Date of publication of application:
**21.09.2005 Bulletin 2005/38**

(73) Proprietor: **Hi-Line S.r.l.**
**10095 Grugliasco (Torino) (IT)**

(72) Inventors:
- **Mangano, Antonio**
**10138 Torino (IT)**
- **Mangano, Giuseppe**
**10133 Torino (IT)**

(74) Representative: **Robba, Pierpaolo**
**INTERPATENT S.R.L.**
**Via Caboto No. 35**
**10129 Torino (IT)**

(56) References cited:
**WO-A-00/21824**
**US-A- 2 666 340**
**US-A- 5 487 709**
**US-A- 6 035 742**
**US-A1- 2004 036 194**
**US-B1- 6 182 528**
**US-B1- 6 421 879**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 577 204 B1

## Description

FIELD OF THE INVENTION

The present invention concerns a handlebar for cycles or motorcycles such as motorbikes for motocross and off-road competitions. However a handlebar according to the present invention can be used also on other kinds of two- three- or four-wheels motorcycles.

BACKGROUND ART

The handlebars for motorcycles generally comprise a bent-iron tube so as to define a median section for fixing the handlebar to the fork head, said fixing being generally carried out by means of an appropriate bracket, of two end sections for holding the handlebar and of two intermediate linking sections.

As it is known, all the components of the frame of motorcycles for cross-country use must have high resistance as they suffer high intensity shocks and stresses.

It is also known the fact that motorcycles, and in particular racing motorcycles, must generally have light structure for improving their performance and their ease of drive.

However, these two needs are often in opposition since the use of lighter materials or of lightened structures can sometimes jeopardise the resistance of the motorcycle's components.

One of the motorcycle's components that during these last years for the above mentioned grounds has undergone lightening interventions is for instance the handlebar.

Recently, particularly light handlebars having an high capability of absorbing vibrations and made of aluminium alloy have been introduced.

The inventors of the present invention noted that, in particular in handlebars for cross-country motorcycles or in general motorcycles for off-road use, dirt such as earth and mud penetrate in the spaces between the handlebar aluminium structure and the cylindrical control sleeve of the accelerator. That, since control sleeve of the accelerator is usually made of plastic or metal and since aluminium does not help an easy sliding and is quickly damaged by abrasion, makes the sliding of the accelerator sleeve on the handlebar more and more difficult, and in some case can even completely blocks and seizes the sleeve up.

However, in particular in motorbike competitions, it is desired reducing as much as possible the friction between the accelerator sleeve and the support on which the sleeve rotates, so as to achieve the best sensibility of the accelerator twist grip.

An object of the present invention is providing a light alloy handlebar for cycles or motorcycles that allows a better operation of the accelerator twist grip, or of other accelerator control elements, in spite of earth- and mud penetration between the light alloy handlebar structure and the rotatable accelerator control sleeve.

Such problem is dealth with in DE20102195U. In order to solve it, DE20102195U teaches to fit a covering of plastic material between the handlebar gripping tube and the twist grip. This way the dust grains do not find any gripping surface in the relatively weak, soft plastic, and the difficulty of use of the twist grip is prevented for a longer time. An example of such plastic covering can be a thermoshrinking PTFE/Teflon film.

Another object of the present invention is providing an alternative solution to the teachings of DE20102195U.

SUMMARY OF THE INVENTION

According to a first aspect of the present invention, these objects are achieved with a handlebar for cycles or motorcycles having the features according to claim 1.

The document 456421879 discloses a handlebar for motorcycles having the features according to the preamble of claim 1.

According to a second aspect of the present invention, these objects are achieved with a method for manufacturing such handlebars for motorcycles having the features according to claim 8.

Preferably the light alloy of which the handlebar tube according to the invention is made is an aluminium alloy.

Preferably the end of the light alloy handlebar tube according to the invention comprises a fitting seat on which said fixed sleeve is fitted, and an axial shoulder against which said tubular fixed sleeve can rest when is fitted on said end of the light alloy tube.

Preferably the fitting seat has a substantially cylindrical shape and diameter substantially smaller than at least the inner diameter of a length of the light alloy tube adjacent to the fitting seat.

Preferably the tubular fixed sleeve has a thickness substantially equal to the depth of said

fitting seat so that the handlebar is without steps on the external surface of said end tube section provided with a seat.

Preferably said tubular fixed sleeve is at least 100 mm long.

The preferred embodiment according to claim 6 is particularly useful when facing the following technical problems.

Another problem affecting known light alloy handlebars are breakages due to the heavy stresses they undergo during a motocross- or however off-road competition.

In order to solve this inconvenience, handlebars with variable diameter or thickness have been proposed in the past for limiting the weight in the less stressed sections and for increasing the resistance in the sections subject to breakage to a greater extent.

US 5,117,708 describes for instance a strengthened handlebar for motorcycles showing a central section having a greater diameter, two end sections having a standard diameter and two tapered linkage sections.

US 5,257,552 describes a handlebar having variable diameter and thickness wherein the central section has a diameter and a thickness greater than the end sections.

US 5,832,785 describes a handlebar having a constant diameter wherein the thickness is internally increased in the central section.

US 5,950,497 describes a handlebar having variable diameter and constant thickness wherein the diameter of the central section is greater than the diameter of the end sections and wherein the linking sections have a tapered diameter.

The handlebars so realised provides two advantages: on the one hand, they are high resistant in the zone of connection to the fork head and, on the other hand, they are easy to manufacture.

However, the handlebars according to the prior art do not completely solve the problems of weight and of elasticity that are particularly important for the racing motorcycles.

The elasticity of the handlebar is in fact a particularly important aspect as a good elasticity guarantees two advantages: on the one hand, the handlebar turns out to be less subject to sudden yielding (breakage or bending) provoked by the very high loads occurring in case of particularly violent shocks due to jumps or falls; on the other hand, it absorbs better the vibrations and the stresses due to the ground roughness, said stresses, when using a rigid handlebar, being transmitted to the pilot's limbs and making the drive much harder.

On the contrary, a handlebar with the right elasticity makes a hard task lighter and increases the pilot's performance.

The handlebars realised according to the described prior art further are affected by the inconvenience of having a not optimally distributed resistance as they sometimes result to be fragile in correspondence with the zones subject to high loads and therefore more critical zones, while they are excessively strong in less critical zones, said handlebars thereby often resulting excessively heavy.

Moreover, the handlebars so realised are often very thin in correspondence with their ends for limiting their weight and this makes difficult the fixing of accessories for protecting the hands ("hand guards") which are blocked by means of expansion terminals on the handlebar ends, as it is described for instance in US 4,141,567.

On the contrary, it is more and more felt the need of obtaining components for racing motorcycles having less weight, high shock resistance and good elasticity.

Therefore an object of the embodiment according to claim 6 is providing a handlebar for motorcycles which is light, resistant and elastic.

Preferably in said embodiment the end sections of the bent tube comprise a corresponding end portion having a diameter $d_{29}$ and a thickness $s_{29}$ and wherein it is $s_{25} > s_{29} > s_{27}$ and besides $d_{29} \cong d_{27}$.

Preferably in said embodiment according to claim 6, the two intermediate linking sections are tapered and have a diameter continuously decreasing from the median section towards the corresponding end sections.

Preferably in said embodiment according to claim 6, the bent tube has a diameter $d_{23}$ of about 28 mm and a diameter $d_{27}$ of about 22 mm, the diameter $d_{25}$ being intermediate between said two values.

Preferably in said embodiment according to claim 6, the bent tube has a thickness $s_{26} \cong 5{,}2$ mm, $s_{23} \cong 4{,}5$ mm, $s_{25} \cong 4{,}2$ mm, $s_{29} \cong 4{,}0$ mm and $s_{27} \cong 2{,}8$ mm.

Alternatively in said embodiment according to clam 6, each of said intermediate linking sections can comprises a cylindrical portion having a constant diameter substantially at the centre of each intermediate section for fixing a clamp having a cylindrical inner section, said clamp being provided with a bracket and with a fixing element for fixing a transversal strengthening bar or crossbar arranged substantially parallel to the median section.

In that case preferably each of said intermediate sections comprises a conical portion substantially at the centre of each intermediate section, the diameter of said conical portion decreasing as one moves away from said median section for fixing a clamp having a conical inner section complementary to the inner section of said conical portion, said clamp being provided with a bracket and being provided with a fixing element for fixing a transversal strengthening bar or crossbar arranged substantially parallel to the central section.

Preferably a handlebar according to claim 6 can be provided in at least one of said end sections with a cylindrical seat, defined by a section having a lower diameter, for inserting a tubular fixed sleeve, preferably made of stainless steel or of composite material comprising for example suitable organic resins, for ensuring an easier sliding of the accelerator control.

A handlebar according to claim 6 and to the abovementioned preferred variants thereof has a varying diameter and a varying thickness along the axis of the handlebar according to a law allowing to reach a right compromise between the need of obtaining an high resistance in the zones more subject to stresses and an high elasticity in presence of dynamic stresses, while obtaining at the same time a mass lower than the mass of the handlebars now in commerce.

A further advantage a handlebar according to claim 6 and to the abovementioned preferred variants thereof is that it is possible to obtain a further straightened version of the handlebar thanks to the possibility of mounting a strengthening crossbar anchored to the intermediate linking sections or by means of two clamps presenting an inverse taper with respect to the taper of the handlebar in the fixing zone, or by defining on the handlebar corresponding cylindrical portions in said intermediate linking sections in order to simplify the fixing of the clamp.

In a second aspect, the present invention concerns a method of manufacturing a handlebar according to claim 1.

Some non-limiting embodiments of the invention will be now described by way of example with reference to the hereby attached figures.

LIST OF FIGURES

- Figure 1 shows a sectional front view of the handlebar according to a first embodiment of the present invention;
- Figure 2 shows a sectional view of a particular of an end of the handlebar of Figure 1;
- Figure 2A shows an enlarged detail of Figure 2;
- Figure 3 is a sectional front view of the handlebar according to a second embodiment of the present invention;
- Figure 4 is a sectional front view of the handlebar according to a third embodiment of the present invention;
- Figure 5 is an enlarged view of a particular of the handlebar of Figure 4.

DETAILED DESCRIPTION

With reference to Figures 1 and 2 a handlebar 211 is shown, realised according to a first embodiment of the present invention.

Said handlebar 211 comprises a bent tube of light alloy 2110, for example a suitable aluminium alloy; a tubular sleeve 263 -referred to as "fixed sleeve 263" in the following- is fitted on at least one of the two ends 215, 215 of the tube 2110; the whole fixed sleeve 263, or at least its outer surface, is made of a material-referred to as "sliding material" in the following- substantially harder and more abrasion resistant than the light alloy of the rest of the tube 2110.

In the example shown the fixed sleeve 263 is about 100 mm long and about 1 mm thick; however the sleeve 263 can be also thicker or thinner than 1 mm -for example 0,1-0,3 mm or 0,1-0,6 mm thick.

Preferably the tubular fixed sleeve 263 is made of stainless steel, steel, titanium alloys or suitable composite materials, for example a carbon fibre- or KEVLAR based composite comprising suitable organic resins. The accelerator twist grip M (Figure 2) of a motorbike or of another motorcycle can be fitted on the sleeve 263 and can rotate and slide on it. Usually the accelerator twist grip M comprises an inner sleeve 264 or however a tubular sleeve made of plastic or sometimes in aluminium, suitable for rotating and sliding or rubbing on the light alloy handlebar tube.

This way aluminium- or light alloy handlebars can be obtained, that are very light, suitable for supporting the accelerator twist grip but are not affected by increasing friction between the twist grip accelerator sleeve and the aluminium surface of the handlebar and seizing up. In fact the hard surface of the fixed sleeve 263 can be damaged in lesser extent by abrasions and scratching due to dirt and mud penetrated between the accelerator sleeve 264 and handlebar tube 2110, therefore on the one hand the resistance to rotation of the twist grip M is more constant in the time and the rotation is smoother and fluid; on the other hand it is supposed that dirt, mud and ground particles rather slip on the hard surface of the fixed sleeve 263 than scratching and engraving it, so reducing the probability of seizing up. Therefore the motorbiker can benefit from all the advantages deriving from the above even after several operation hours, expecially in competitions.

Moreover the handlebar needs to be replaced less frequently.

Preferably the fixed sleeve 263 is fitted on a fitting seat 261 in the present example a cylindrical seat 261 defined by a length having a smaller diameter and an axial shoulder 265 (Figure 2A) against which the sleeve 263 can rest in a precise axial position when assembled on the tube 2110.

Preferably the fixed sleeve 263 is substantially as thick as the depth of the cylindrical seat 261, so that the outer surface of the handlebar 211 is substantially without at its end portion, where the seat 261 is provided.

In the shown example the fixed tubular sleeve 263 has a length of about 100 mm; nevertheless other lenghts can be chosen.

Advantageously the fitting seat 261 is made by turning on a suitable lathe: this way the fixed sleeves 263 can be derived from standard commercial tubes substantially with no need of further finishing operations for reducing the tolerances of the inner diameter thereof -said tolerances usually can range for example between 0,2 and 0,6 mm. In fact the cylindrical seat 261 can be turned setting the nominal value and tolerance of its outer diameter according to the inner diameter tolerances of each lot of standard commercial tubes from which the fixed sleeves 263 are derived, so as to obtain radial tolerances between the fitting seat 261 and the fixed sleeve 263 even smaller than 0,1 mm, or however much smaller than the standard tube tolerances.

Advantageously the tubular sleeve 263 is fixed on the seat 261 by gluing: this allows connecting the two parts with the radial tolerances obtained with the above described manufacturing method or, more generally, in spite of radial tolerances not very precise with no need of further finishing operations; on the contrary working methods such as welding or soldering require smaller coupling tolerances.

Preferably but not necessarily the handlebar 211 is derived from a bent tube 2110, preferably made of aluminium alloy and having circular cross-section, and comprises a median section 13 for fixing the handlebar 211 at the vehicle's fork head, two end sections 215, 217 for gripping the handlebar and two intermediate sections 19,21 for linking the central section 13 and the two end sections 215, 217.

Preferably but not necessarily, both the diameter and the thickness of the handlebar 211 vary along the longitudinal axis S of the handlebar in order to define a portion 23 of diameter $d_{23}$ and thickness $s_{23}$ at the centre of the median section 13 and comprising inner bending zones 24, a portion 25 substantially at the centre of the intermediate sections 19,21 having a diameter $d_{25}$ and a thickness $s_{25}$, a portion 26 corresponding respectively to the external bending zones and having a diameter $d_{26}$ and a thickness $s_{26}$, a portion 27 at the centre of the end sections 215, 217 having a diameter $d_{27}$ and a thickness $s_{27}$, and a portion 29 at the free end of said end sections 215, 217 having a diameter $d_{29}$ and a thickness $s_{29}$ and length of about 50 mm.

According to this first embodiment of the present invention, the diameter of the handlebar varies according to the following law:

$$d_{23} > d_{25} > d_{27}$$

and the thickness of the handlebar varies according to the following law:

$$s_{26} > s_{23} > s_{25} > s_{29} > s_{27},$$

wherein preferably $d_{29} \cong d_{27}$.

Moreover, the two intermediate linking sections 19,21 are tapered and have a diameter continuously decreasing as one moves away from the central section 13 towards the corresponding end sections 215, 217.

In one embodiment of the handlebar according to the present invention, the bent tube has a diameter $d_{23}$ of about 28 mm and a diameter $d_{27}$ of about 22 mm, the diameter $d_{25}$ being intermediate between said two values.

Again according to said embodiment, the bent tube has a thickness $s_{26} \cong 5{,}2$ mm, $s_{23} \cong 4{,}5$ mm, $s_{25} \cong 4{,}2$ mm, $s_{29} \cong 4{,}0$ mm and $s_{27} \cong 2{,}8$ mm.

That is, according to the above described embodiment, the diameters and the thickness of the tube 2110 are such to provide on the one hand greater robustness in the critical handlebar points and, on the other hand, optimal elasticity and lightness.

In fact, the zones wherein the stresses are more concentrated, and therefore the zones more subject to yielding due to breakage or permanent buckling, are the zones in correspondence with the fork actuating plate and the zones corresponding to the bendings of the handlebar. Besides, these latter zones, given their geometry and because of the weakening due to the stress of the material during the bending, often turn out to be less resistant with respect to the remaining parts of the handlebar and therefore need to have an appropriate thickness.

Thanks to the above described diameter and thickness variation, it is possible to optimise the behaviour of the handlebar while maintaining a high resistance in the bending and actuating zones. In particular, in the external bending zones shown in Figure 1 with the reference 26 the weakening due to the reduced diameter is counterbalanced by the increase of the thickness. In fact, in these zones the thickness of the material results to be greater than the remaining parts of the handlebar.

The handlebar 211 advantageously comprises a portion 29 of increased thickness (about 4,0 mm) in correspondence with the free ends of the handlebar, and about 50 mm long, for fixing expansion inserts, for instance for fixing hand guards.

The handlebar so obtained optimises resistance to buckling, elasticity and lightness. In particular, the resistance is varied as a function of the stresses to which the handlebar is subject in the different sections during the use, so as not to uselessly increase the weight of the handlebar in little stressed zones and to maintain an high resistance in the zones subject to stresses to a greater extent. In this way, even by maintaining the handlebar light, there are obtained greater flexibility and elasticity with respect to the known handlebars and optimal absorption of those shocks due to the ground roughness, to the jumps and to the falls, that are typical of the cross-country use of motorcycles.

Nevertheless a handlebar light alloy tube according to the present invention can have cross sections which are substantially constant along the tube itself (Figure 3) in shape and dimensions -namely in diameter, in case of circular cross-section light alloy tubes- or which vary according to different laws from the one, just described above, of the embodiment of Figures 1 and 2.

With reference now to the Figures 4 and 5 a handlebar 111 is described, realised according to two variants of a third embodiment of the present invention.

The handlebar 111 has a portion 125 substantially at the centre of each intermediate section 119,121 to which it is fixed a clamp 151 provided with a bracket 153 and with a fixing element, for instance a screw or a bolt 155, for fixing a transversal strengthening bar or crossbar 157 arranged substantially parallel to the central section 113.

Since said portion 125 is conical and presents a diameter decreasing as one moves away from the central section 113, the clamp 151 correspondingly presents an internal section with complementary taper in order to adapt itself to the taper of said central portion 125.

Alternatively, according to a variant of said third embodiment of the present invention, it is provided that said central portion 125 is realised cylindrical. Advantageously, in this way said portion 125, being cylindrical at constant diameter, constitutes a zone suitable for fixing a clamp 151 of standard type with an inner section which is also cylindrical. In this case, the intermediate sections 119,121 will have two conical sections at their ends, that link themselves from the one side to the cylindrical portion 125 and to the other side to the inner 124 and external 126 bending zones respectively. The cylindrical portion 125 will be in this way comprised between the two conical sections.

The handlebar according to this embodiment of the present invention, thus having variable thickness and diameter and provided with a crossbar 157, turns out to be particularly suitable to be employed in protracted hard conditions and in all those cases where it is necessary a support to which steadily anchor auxiliary instruments like for instance the instruments necessary during the motorcycle rallies.

The non limiting embodiments above described can be subject to various modifications and changes without departing from the scope of the present invention as defined by the appended claims. More generally the tubular fixed sleeve 263 can be replaced, on one or both the ends of the light alloy tube, with a layer of a sliding material harder and more abrasion resistant than the light alloy of the tube. Such harder layer can be made for example by thermal- or electrochemical treatments of the light alloy tube.

## Claims

1. Handlebar for motorcycles (111, 211, 311) comprising a light alloy tube (2110) to an end of which a twist grip (M) of the motorcycle accelerator can be set, wherein said end is externally covered by a layer of material (263), which comprises a tubular fixed sleeve (263) made of sliding material and fitted on said end of the light alloy tube **characterized in that** said layer of material is substantially harder and more abrasion resistant than said light alloy of said tube.

2. Handlebar according to claim 1, wherein said sliding material is chosen from the following group: steel, stainless steel, titanium alloy, a composite material.

3. Handlebar according to one or more preceding claims, wherein said end of the light alloy tube comprises a fitting seat (261) on which said tubular fixed sleeve (263) is fitted, and an axial shoulder (265) against which said tubular fixed sleeve can rest when is fitted on said end of the light alloy tube, and wherein said fitting seat (261) is made at least by turning.

4. Handlebar according to one or more preceding claims, wherein said tubular fixed sleeve (263) is fixed to the light alloy tube at least by gluing.

5. Handlebar according to one or more preceding claims, further comprising a twist grip (M) suitable for rotating on and around said tubular fixed sleeve (263) for driving a motorcycle accelerator.

6. Handlebar for motorcycles (111, 211) according to one or more preceding claims, wherein said light alloy tube is bent so as to define:

   - a median section (13, 113) comprising a central portion (23) having a diameter $d_{23}$ and a thickness $s_{23}$ for fixing the handlebar;
   - two end sections (15, 17), each of them comprising a central portion (27) having a diameter $d_{27}$ and a thickness $s_{27}$ for holding the handlebar; and
   - two intermediate linking sections (19, 21), each of them comprising a central portion (27) having a diameter $d_{25}$ and a thickness $s_{25}$ and linked to said median section (13) in an internal bending zone (24) and to one corresponding of said end sections (15, 17) in an external bending zone (26) having a thickness $s_{26}$;

   said handlebar having variable diameter and thickness, wherein said thickness and said diameter vary according to the following law:

$$d_{23} > d_{25} > d_{27}$$

   and the thickness of the handlebar varies according to the following law:

$$s_{26} > s_{23} > s_{25} > s_{27}.$$

7. Handlebar for motorcycles according to one or more claims from 1 to 5, wherein said light alloy tube has substantially constant cross-sections along its length.

8. Method for manufacturing a handlebar for motorcycles (111, 211, 311) according to one or more claims from 1 to 7, comprising the following steps:

   - providing a light alloy tube (2110) to an end of which a twist grip (M) of the motorcycle accelerator can be set;
   - providing a layer of sliding material (263) comprising a tubular sleeve (263) made of the sliding material (263);
   - externally covering said end of the light alloy tube (2110) with said layer of sliding material (263) by fitting and gluing said tubular sleeve (263) on said end;

and **characterised in that** said layer of sliding material (263) is substantially harder and more abrasion resistant than said light alloy of said tube.

**9.** Method according to claim 8, comprising the steps of:

- making a fitting seat (261) on said end of the light alloy tube, at least by turning;
- fitting said tubular fixed sleeve (263) on said fitting seat (261).

**10.** Method according to claim 9, comprising the steps of:

- making an axial shoulder (265) on said end of the light alloy tube;
- making said tubular fixed sleeve rest against said axial shoulder (265) when said tubular fixed sleeve is fitted on said end of the light alloy tube.

**Patentansprüche**

**1.** Lenker für Motorräder (111, 211, 311), der ein Leichtmetallrohr (2110) umfasst, an dessen einem Ende ein Gasdrehgriff (M) des Motorrads aufgezogen werden kann, wobei jenes Ende außen mit einem Materialbelag (263) bedeckt ist, der eine rohrförmige festsitzende Büchse (263) aus Gleitwerkstoff aufweist und an jenem Ende des Leichtmetallrohrs montiert ist,
**dadurch gekennzeichnet, dass** dieser Materialbelag wesentlich härter und verschleißfester ist als das Leichtmetall jenes Rohres.

**2.** Lenker nach Anspruch 1, wobei der Gleitwerkstoff aus folgender Gruppe gewählt wird: Stahl, rostfreier Stahl, Titanlegierung, Verbundmaterial.

**3.** Lenker nach einem oder mehreren der vorhergehenden Ansprüche, wobei das Ende des Leichtmetallrohres einen Passsitz (261) aufweist, auf dem die rohrförmige festsitzende Büchse (263) montiert ist, sowie eine axiale Schulter (265), an der die rohrförmige festsitzende Büchse anschlagen kann, wenn sie auf dem Ende des Leichtmetallrohrs montiert wird, wobei der Passsitz (261) mindestens durch Drehen hergestellt wird.

**4.** Lenker nach einem oder mehreren der vorhergehenden Ansprüche, wobei die rohrförmige festsitzende Büchse (263) auf dem Leichtmetallrohr mindestens durch Kleben befestigt wird.

**5.** Lenker nach einem oder mehreren der vorhergehenden Ansprüche, der weiterhin einen zum Drehen auf und um jene rohrförmige festsitzende Büchse (263) geeigneten Drehgriff (M) zur Betätigung eines Motorradgasgriffs aufweist.

**6.** Lenker für Motorräder (111, 211) nach einem oder mehreren der vorhergehenden Ansprüche, wobei das Leichtmetallrohr gebogen ist, sodass zu unterscheiden ist:

- ein Mittelabschnitt (13, 113), der einen zentralen Bereich (23) mit einem Durchmesser $d_{23}$ und eine Dicke $s_{23}$ zur Befestigung des Lenkers aufweist;
- zwei Endabschnitte (15, 17), deren jeder einen zentralen Bereich (27) mit einem Durchmesser $d_{27}$ und einer Dicke $s_{27}$ zur Halterung des Lenkers aufweist; sowie
- zwei dazwischen liegende Verbindungsabschnitte (19, 21), deren jeder einen zentralen Bereich (25) mit einem Durchmesser $d_{25}$ und einer Dikke $s_{25}$ aufweist und mit dem Mittelabschnitt (13) durch eine innere Biegezone (24) und mit einem entsprechenden Endabschnitt (15, 17) durch eine äußere Biegezone (26) mit einer Dicke $s_{26}$ verbunden ist;

dieser Lenker besitzt unterschiedliche Durchmesser und Dicken, wobei jene Dicken und jene Durchmesser folgender Formel gemäß variieren:

$$d_{23}>d_{25}>d_{27}$$

und die Dicken des Lenkers nach folgender Formel variieren:

$$s_{26}>s_{23}>s_{25}>s_{27}$$

**7.** Lenker für Motorräder nach einem oder mehreren der Ansprüche 1 bis 5, wobei das Leichtmetallrohr über seine Länge im Wesentlichen konstante Querschnitte aufweist.

**8.** Verfahren zur Herstellung eines Lenkers für Motorräder (111, 211, 311) nach einem oder mehreren der Ansprüche 1 bis 7, das folgende Schritte aufweist:

- Bereitstellung eines Leichtmetallrohrs (2110), an dessen einem Ende ein Drehgriff (M) des Motorradgashebels platziert werden kann;
- Bereitstellung einer Lage Gleitmaterials (263), die eine aus dem Gleitmaterial (263) hergestellte rohrförmige Buchse (263) umfasst;
- äußere Abdeckung des Endes des Leichtmetallrohrs (2110) mit der Lage Gleitmaterial (263) durch Montieren und Kleben der rohrförmigen Buchse (263) auf jenes Ende,

**dadurch gekennzeichnet, dass** die Lage Gleitmaterial (263) wesentlich härter und verschleißfester ist als das Leichtmetall des Rohrs.

**9.** Verfahren nach Anspruch 8, das folgende Schritte aufweist:

- Fertigen eines Passsitzes (261), mindestens durch Drehen auf dem Ende des Leichtmetallrohrs;
- Montieren der rohrförmig festsitzenden Buchse (263) auf dem Passsitz (261).

**10.** Verfahren nach Anspruch 9, das folgende Schritte umfasst:

- Fertigen einer axialen Schulter (265) an jenem Ende des Leichtmetallrohrs;
- jene rohrförmige festsitzende Buchse gegen die Axialschulter (265) zum Anschlag bringen, wenn die rohrförmige festsitzende Buchse auf jenes Ende des Leichtmetallrohrs montiert wird.

**Revendications**

**1.** Guidon pour motocyclettes (111, 211, 311) comprenant un tube en alliage léger (2110) à une extrémité duquel une poignée tournante (M) de l'accélérateur de la motocyclette peut être disposée, dans lequel ladite extrémité est recouverte extérieurement d'une couche de matériau (263) qui constitue un manchon tubulaire fixe (263) fait en un matériau anti-friction et ajusté sur ladite extrémité du tube en alliage léger, **caractérisé en ce que** ladite couche de matériau est essentiellement plus dure et plus résistante à l'abrasion que ledit alliage léger dudit tube.

**2.** Guidon selon la revendication 1, dans lequel ledit matériau anti-friction est choisi à partir du groupe suivant : acier, acier inoxydable, alliage de titane, matériau composite.

**3.** Guidon selon l'une ou plusieurs des revendications précédentes, dans lequel ladite extrémité du tube en alliage léger comprend une embase d'ajustement (261) sur laquelle ledit manchon tubulaire fixe (263) est ajusté, et un épaulement axial (265) contre lequel ledit manchon tubulaire fixe peut reposer lorsqu'il est ajusté sur ladite extrémité du tube en alliage léger et dans lequel ladite embase d'ajustement (261) est réalisée au moins au tour.

**4.** Guidon selon l'une ou plusieurs des revendications précédentes, dans lequel ledit manchon tubulaire fixe (263) est fixé au tube en alliage léger au moins par collage.

**5.** Guidon selon l'une ou plusieurs des revendications, précédentes comprenant, de plus, une poignée tournante (M) appropriée pour tourner sur et autour dudit manchon tubulaire fixe (263) en vue de commander un accélérateur de la motocyclette.

**6.** Guidon pour motocyclettes (111, 211) selon l'une ou plusieurs des revendications précédentes, dans lequel ledit tube en alliage léger est courbé de façon à définir:

- une section médiane (13, 113) comprenant une partie centrale (23) ayant un diamètre $d_{23}$ et une épaisseur $S_{23}$ destinée à fixer le guidon,
- deux sections d'extrémité (15, 17), chacune d'elles comprenant une partie centrale (27) ayant un diamètre $d_{27}$ et une épaisseur $S_{27}$ destinée à tenir le guidon ; et
- deux sections de liaison intermédiaires (19, 21), chacune d'elles comportant une partie centrale (25) ayant un diamètre $d_{25}$ et une épaisseur $S_{25}$ et reliée à ladite section médiane (13) dans une zone de courbure interne (24) et à l'une desdites sections d'extrémité correspondante (15, 17) dans une zone de courbure externe (26) ayant une épaisseur $S_{26}$ ;

ledit guidon ayant un diamètre et une épaisseur variables, dans lequel ladite épaisseur et ledit diamètre varient selon la loi suivante :

$$d_{23} > d_{25} > d_{27}$$

et l'épaisseur du guidon varie selon la loi suivante :

$$S_{26} > S_{23} > S_{25} > S_{27}$$

**7.** Guidon pour motocyclettes selon l'une ou plusieurs des revendications 1 à 5, dans lequel ledit tube en alliage léger présente des sections transversales essentiellement constantes sur toute sa longueur.

**8.** Procédé de fabrication d'un guidon pour motocyclettes (111, 211, 311) selon l'une ou plusieurs des revendications 1 à 7, comportant les étapes suivantes:

- fournir un tube en alliage léger (2110) à une extrémité duquel une poignée tournante (M) de l'accélérateur de la motocyclette peut être disposée ;
- fournir une couche de matériau anti-friction (263) constituant un manchon tubulaire (263) fabriqué en matériau anti-friction (263) ;
- recouvrir extérieurement ladite extrémité du tube en alliage léger (2110) avec ladite couche de matériau anti-friction (263) en adaptant et en collant ledit manchon tubulaire (263) sur ladite extrémité ;

et **caractérisé en ce que** ladite couche de matériau anti-friction (263) est essentiellement plus dure et plus résistante à l'abrasion que ledit alliage léger dudit tube.

**9.** Procédé selon la revendication 8, comprenant les étapes consistant à :

- réaliser une embase d'ajustement (261) sur ladite extrémité du tube en alliage léger, au moins au tour ;
- ajuster ledit manchon fixe tubulaire (263) sur ladite embase d'ajustement (261).

**10.** Procédé selon la revendication 9, comprenant les étapes consistant à :

- réaliser un épaulement axial (265) sur ladite extrémité du tube en alliage léger ;
- faire reposer ledit manchon fixe tubulaire contre ledit épaulement axial (265) lorsque ledit manchon fixe tubulaire est ajusté sur ladite extrémité du tube en alliage léger.

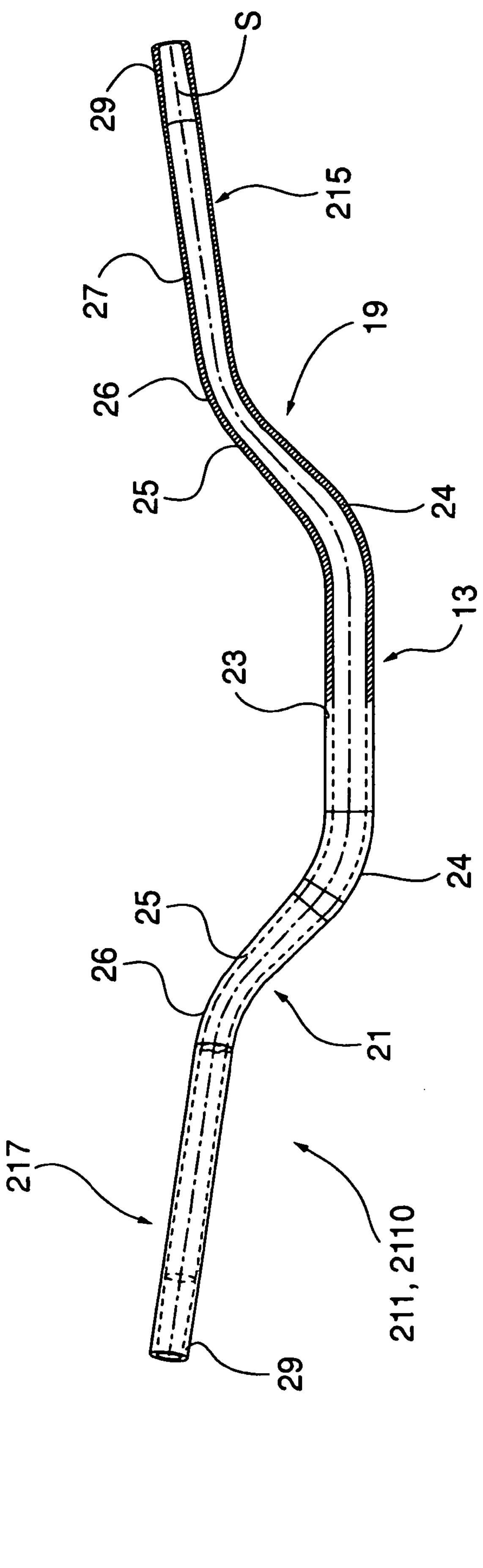


Fig. 1

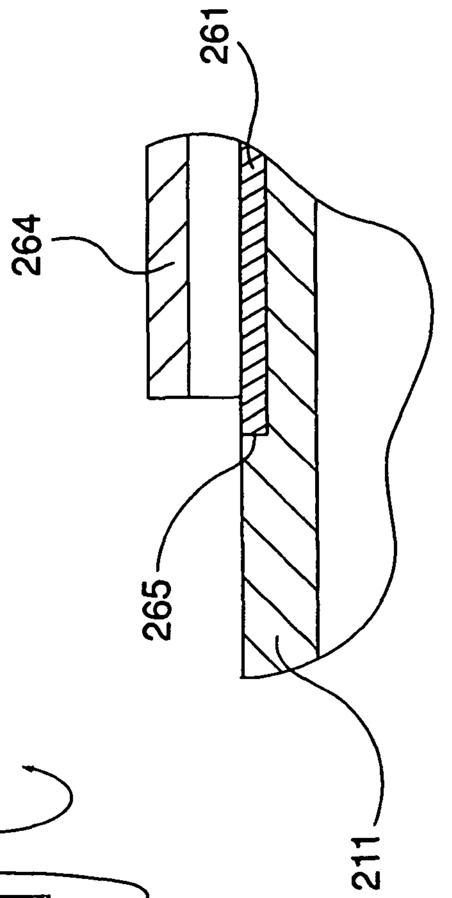


Fig. 2a

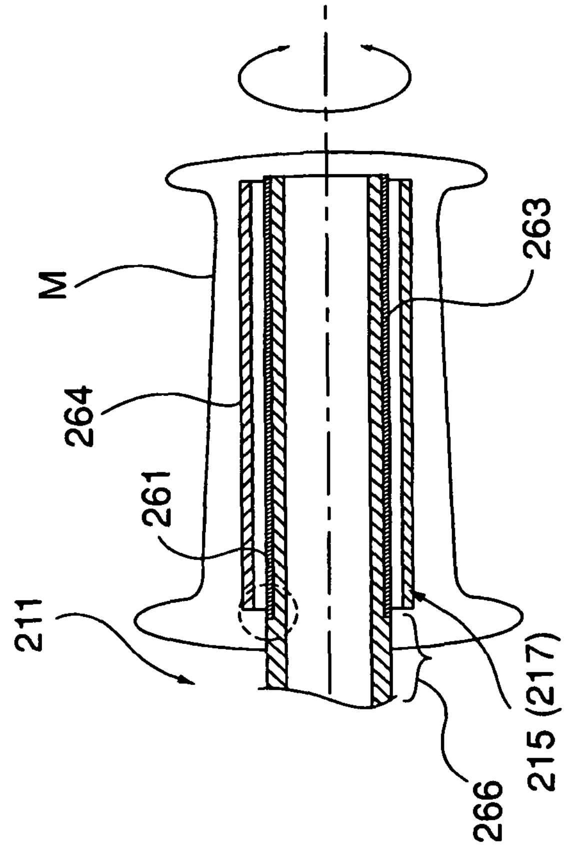


Fig. 2

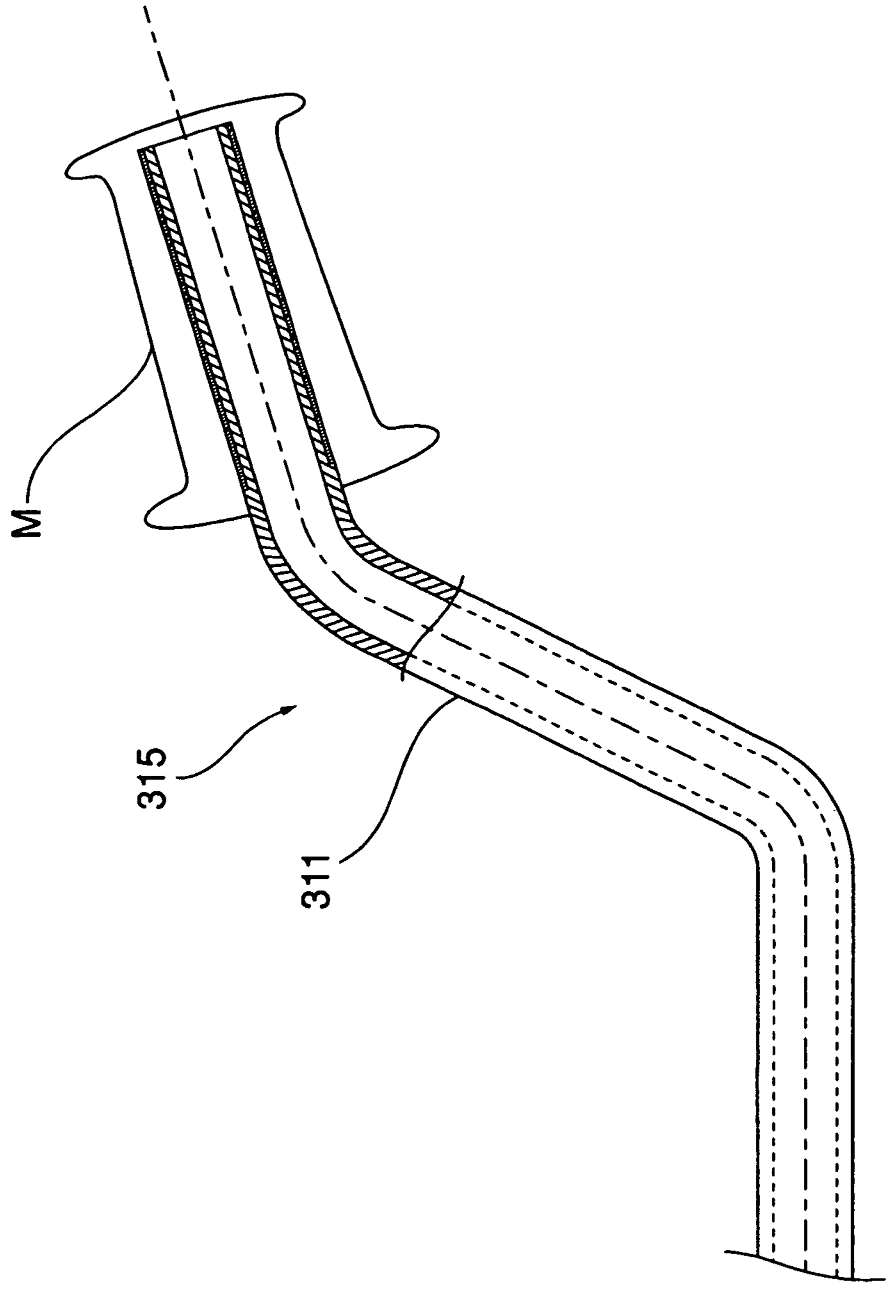


Fig. 3

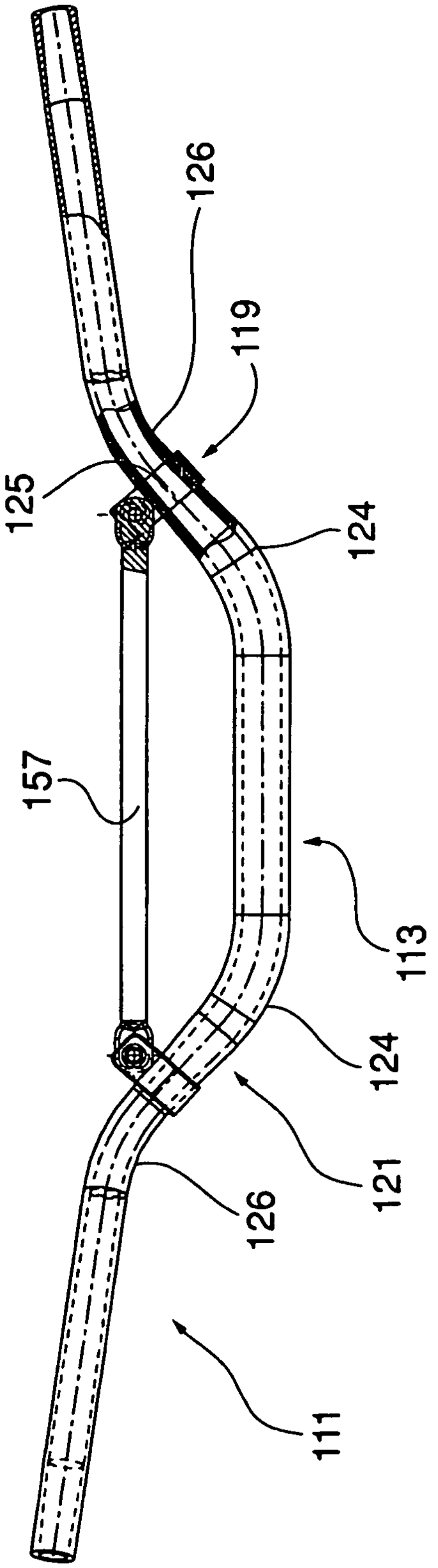


Fig. 4

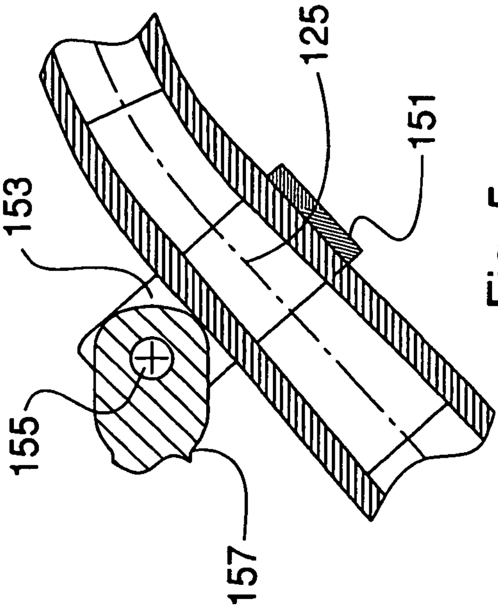


Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 20102195 U
- US 5117708 A
- US 5257552 A
- US 5832785 A
- US 5950497 A
- US 4141567 A